# FASCICULE DE BREVET EUROPEEN

(11) **EP 0 801 761 B1**
(45) Date de publication et mention de la délivrance du brevet: **19.12.2001**
(21) Numéro de dépôt: 95919468.9
(22) Date de dépôt: 03.05.1995
(51) Int. Cl.: G02B 27/00, A61B 19/00, A61B 6/00

(54) **DISPOSITIF OPTIQUE POUR LA VISUALISATION D'UNE IMAGE VIRTUELLE TRIDIMENSIONNELLE EN SUPERPOSITION AVEC UN OBJET REEL, NOTAMMENT POUR DES APPLICATIONS CHIRURGICALES**
OPTISCHE EINRICHTUNG ZUR ANZEIGE EINES VIRTUELLEN DREIDIMENSIONALEN BILDES BEI ÜBERLAGERUNG MIT EINEM REELLEN OBJEKT BESONDERS FÜR CHIRURGISCHE ANWENDUNGEN
OPTICAL DEVICE FOR VIEWING A VIRTUAL THREE DIMENSIONAL IMAGE SUPERIMPOSED ON A REAL OBJECT, SUITABLE, IN PARTICULAR, FOR SURGICAL APPLICATIONS

(30) Priorité: 31.05.1994 FR 9406623
(43) Date de publication de la demande: 22.10.1997
(73) Titulaire: CENTRE NATIONAL DE LA RECHERCHE SCIENTIFIQUE (CNRS), 75016 Paris (FR)
(72) Inventeur: PEUCHOT, Bernard, F-63960 Veyre-Menton (FR); TANGUY, Alain, F-63000 Clermont-Ferrand (FR); EUDES, Michel, F-63130 Royat (FR)
(74) Mandataire: Pernez, Helga
(86) Numéro de dépôt international: FR9500573
(87) Numéro de publication internationale: WO9533221

(56) Documents cités:
- EP-A- 0 515 328
- EP-A- 0 537 945
- EP-A- 0 572 284
- US-A- 4 674 837
- US-A- 5 106 179
- US-A- 5 230 623

## Description

La présente invention à pour objet un dispositif optique pour la visualisation d'une image virtuelle tridimensionnelle en superposition avec un objet réel, notamment pour des applications chirurgicales.

On connaît dans l'état de la technique des procédés pour la construction d'images de synthèse tridimensionnelles à partir d'images obtenus avec des moyens d'imagerie tels qu'un scanner, un tomographe ou tout appareil équivalent. Ces images sont ensuite exploitées pour le guidage d'instruments chirurgicaux.

A titre d'exemple, le brevet allemand DE3717871 décrit un procédé et un dispositif de représentation optique d'interventions chirurgicales.

Ce procédé est destiné à la représentation optique reproductible d'une intervention à effectuer à l'aide d'un instrument chirurgical, procédé avec lequel les informations tomographiques de la partie du corps dans laquelle l'intervention chirurgicale est à effectuer, sont mémorisées dans la mémoire de données d'un système de traitement des données. Les données relatives à la position du champ d'intervention sont déterminées à partir des informations tomographiques. Dans le procédé selon ce document antérieur, l'instrument chirurgical est fixé sur un support tridimensionnel à mouvement libre, et les données relatives à la position de l'instrument chirurgical sont déterminées grâce à un dispositif de mesure des coordonnées et transmises au système de traitement des données, qui établit une relation entre les données relatives à la position de l'instrument chirurgical et les données relatives à la position du champ d'intervention, et avec lequel l'instrument chirurgical est orienté vers le champ d'intervention grâce à cette relation. Le procédé comporte les étapes suivantes :
- au moins trois points de mesure accessibles à partir de l'extérieur sont déterminés ou repérés à titre de points de référence sur la partie du corps,
- les tomographies comprenant les points de mesure sont effectuées de la partie du corps et stockées dans la mémoire de données,
- la position dans l'espace des points de mesure est détectée par le dispositif de mesure des coordonnées;
- les données mesurées sont stockées dans la mémoire de données,
- le système de traitement des données établit une relation entre les données d'image des points de mesure contenues dans les tomographies et les données déterminées par le dispositif de mesure des coordonnées à partir des points de mesure,
- le dispositif de mesure des coordonnées détecte en permanence la position dans l'espace de l'instrument chirurgical tridimensionnel à mouvement libre, et les données de position sont transmises au système de traitement des données,
- le système de traitement des données superpose les données relatives à la position de l'instrument chirurgical aux informations d'image des tomographies, et le système de traitement des données produit des images en superposition sur un dispositif de sortie, en particulier un écran de visualisation, dans lesquelles les contenus d'image des tomographies et les positions respectives de l'instrument chirurgical sont superposées.

Les procédés selon l'état de la technique ne permettent toutefois pas l'exploitation satisfaisante des images tridimensionnelles dans des conditions opératoires habituelles. Les dispositifs de visualisation de l'art antérieur imposent une technique opératoire particulière, et peu compatible avec les gestes usuels de l'opérateur visualisation sur un écran indépendant ou sur un casque.

Le but de la présente invention est de remédier à ces inconvénients en proposant un dispositif de visualisation susceptible d'être utilisé dans les conditions de travail habituelles, notamment en ce qui concerne les conditions d'éclairage de l'objet réel, les positions et geste de l'opérateur, et les modes d'accommodation visuelle. Le dispositif selon l'invention vise en particulier à créer des images de synthèse tridimensionnelles très lumineuses permettant la superposition de ces images sur un objet réel fortement éclairé, par exemple par un éclairage scialytique couramment employé en salle d'opération. Elle vise aussi à proposer un dispositif compatible avec les conditions d'asepsie rencontrer pour un usage chirurgical. Ce but est atteint avec un dispositif optique selon la revendication 1.

Bien que le dispositif selon l'invention soit particulièrement adapté à une application en bloc opératoire, il n'est pas limité à un usage chirurgical, et peut être mis en oeuvre pour tout autre application dans le domaine du jeu, de la pédagogie, ou de l'industrie.

Le dispositif de l'invention comporte un moyen de formation d'images très lumineuses et deux miroirs semi-transparents disposés entre chaque point d'observation - chaque oeil de l'observateur - et la zone réelle observée maintenus en place et orientés de manière à réfléchir chaque image de synthèse vers le point d'observation correspondant.

Le confort d'utilisation du dispositif est optimum quant la distance séparant le support des miroirs et le support de formation des images est voisine de la distance séparant le support des miroirs et l'objet réel observé. Une variante de mise en oeuvre particulière , comprenant un jeu de lentilles supplémentaires, permet toutefois d'atteindre un confort d'utilisation acceptable en s'affranchissant de cette contrainte d'égalité de distance.

Un tel dispositif permet de réaliser une superposition de grande précision, avec des erreurs inférieur à 0,5 millimètres appréciées dans le repère tridimensionnel de l'objet.

Avantageusement, le moyen de formation d'une image virtuelle est constitué par un écran électro-optique rétroéclairé tel qu'un écran à cristaux liquides servant de support au couple d'images stéréoscopiques. Le dispositif d'éclairage situé du coté opposé aux miroirs réfléchissants comprend une source lumineuse de forte intensité, un bloc optique concentrateur et deux lentilles de Fresnel concentrant le flux lumineux sur les miroirs semi-réfléchissants.

Selon une variante de mise en oeuvre, un dispositif de mesure optique permet de connaître à tout moment la position de chaque point d'observation (oeil) relativement à la position des miroirs semi-réfléchissants et de recalculer le couple d'images visualisées.

Ce moyen d'analyse délivre un signal permettant de recalculer le couple d'images visualisé sur l'écran en tenant compte de la position de l'oeil par rapport au miroir semi-transparent.

L'invention sera mieux comprise à la lecture de la description qui suit, faisant référence aux dessins annexés où:
- la figure 1 représente une vue schématique du dispositif, selon un plan de coupe longitudinal ;
- la figure 2 représente une vue selon un plan de coupe transversal du dispositif.

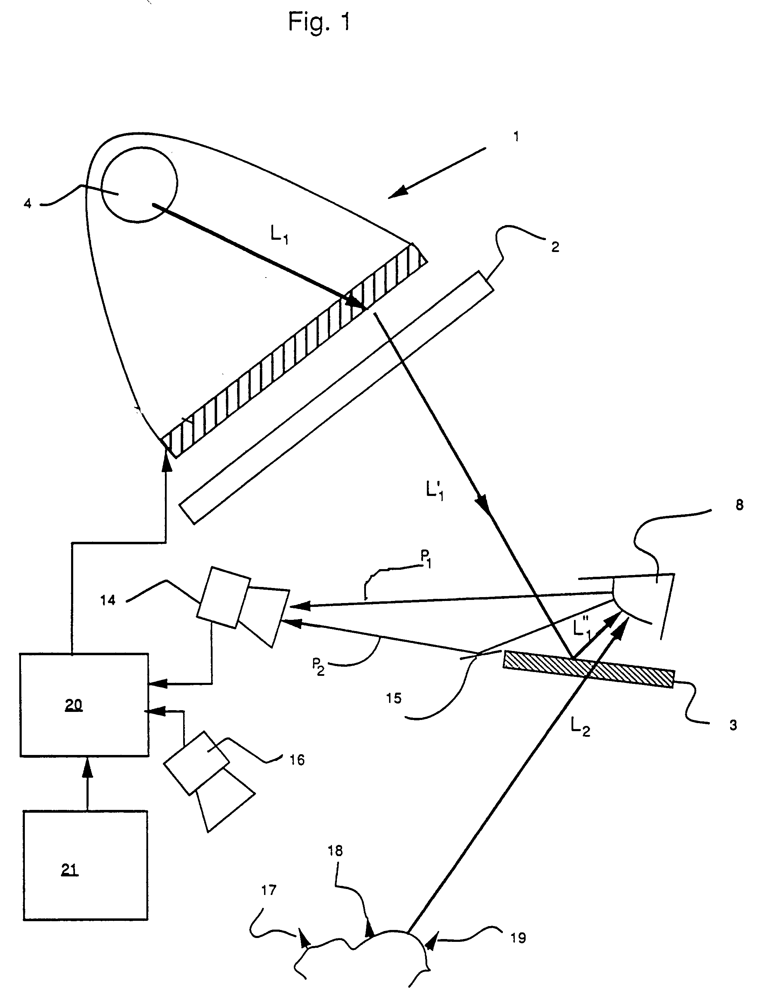

La figure 1 représente une vue schématique d'un exemple de réalisation d'un dispositif optique selon l'invention.

Le dispositif selon l'invention comporte principalement :
- un bloc d'éclairage (1) ;
- une tablette de projection support des images de synthèse(2) ;
- le support des miroirs semi-transparents (3).

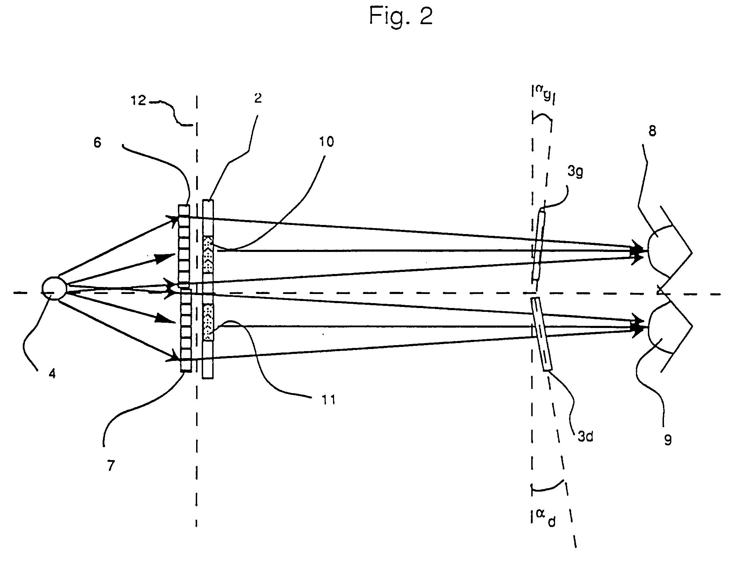

Le bloc d'éclairage (1) est représenté en figure 2. Il est constitué par une lampe halogène et d'un concentrateur (4) et par un ensemble formé de deux lentilles de Fresnel (6, 7), dont la fonction est de concentrer le flux lumineux sur les miroirs semi-réfléchissants (3, 3g, 3d) en direction de chaque oeil (8, 9) de l'observateur. La tablette électronique (2), par exemple un écran à cristaux liquides, est accolé au bloc d'éclairage (1). Le support électronique des images de synthèse (2) est reliée à un ordinateur délivrant des signaux vidéo adaptés. Chaque image de synthèse (10, 11) est calculée pour former un couple d'images stéréoscopiques dont la réflexion sur le miroir correspondant (3d, 3g) est superposée à la vue de l'objet réel observé.

Le trajet lumineux L1 issu de la lampe (4) traverse la lentille de Fresnel (6, 7) qui le réoriente selon la direction L'₁. Le rayon L'₁ traverse l'écran (2) en prenant en charge l'information lumineuse affichée, se réfléchit sur les miroirs (3g ou 3d) et atteint l'oeil (8, 9) de l'observateur selon la direction L"1. La perception des rayons L"1, très lumineux, en provenance des images de synthèse adaptées à chaque oeil donne l'illusion d'un objet virtuel tridimensionnel. La qualité dimensionnelle de cet objet de synthèse est directement liée à la qualité de la modélisation assurant une parfaite cohérence entre les rayons de synthèse et les rayons réels L2.

La position des yeux de l'observateur est calculée à partir des informations fournies par la caméra (14) qui observe les pupilles selon deux points de vue différents : un trajet direct (P1) et un trajet (P2) réfléchi sur un miroir de renvoi (15).

La position de l'objet réel est calculée précisément à partir des informations fournies par la caméra (16) observant cet objet. Différentes techniques existent et sont publiées dans la littérature scientifique : détection de contours apparents, détection subpixel de points d'amer (17, 18, 19...) fixés solidement sur l'objet étudié.

La connaissance de la position des yeux de l'observateur d'une part et celle de la position de l'objet réel d'autre part permet d'ajuster en permanence le dessin des deux images de synthèse (10, 11) pour garantir un suivi et une superposition parfaite de l'objet observé.

L'ordinateur (20) reçoit les informations numériques des caméras (14, 15), calcule la position des yeux (8, 9), calcule la position et l'orientation de l'objet observé (17, 18, 19) et calcule enfin les images de synthèse (10, 11) à afficher sur l'écran de visualisation (2) à partir du modèle de l'objet mémorisé auparavant (21). L'algorithme général de calcul prend en compte la correction des défauts géométriques et des distorsions dans les images des caméras.

Un exemple d'algorithme de correction est décrit dans la publication "COMPUTERIZED MEDICAL IMAGING AND GRAPHICS, vo. 17 Nos 4/5 pp 289-294, 1993".

L'algorithme de recalcul des images de synthèse en fonction de la position et de l'orientation de l'objet déterminé par l'observation automatique des points de repères (17 à 19) fixés rigidement sur l'objet, ou de repères naturels tels que contours apparents ou zones de contrastes.

La figure 2 représente une vue selon un plan de coupe transversal du dispositif.

Les deux lentilles de Fresnel (6, 7) sont constituées par deux éléments indépendants, ou par une lentille de Fresnel en forme de disque divisée en deux parties complémentaires.

Les lames semi-transparentes (3d, 3g) forment avec le plan horizontal (12) des angles respectivement α_{d} et α_{g} ajustables en fonction des caractéristiques géométriques de l'ensemble du système.

La présente invention est décrite dans ce qui précède à titre d'exemple non limitatif. L'Homme de Métier sera à même de réaliser diverses variantes sans pour autant sortir du cadre de l'invention.

## Revendications

1. Dispositif optique pour la visualisation d'une image virtuelle tridimensionnelle en superposition avec un objet réel de proximité, **caractérisé en ce qu'**il comporte un moyen de formation d'une image virtuelle tridimensionnelle et deux miroirs semi-transparents disposés entre l'observateur et l'objet réel selon des angles respectivement α_{d} et α_{g} de façon à ce que les deux images de synthèse formant l'image virtuelle tridimensionnelle se superpose avec la vision de l'objet réel par respectivement l'oeil droit et l'oeil gauche.

2. Dispositif optique pour la visualisation d'une image virtuelle tridimensionnelle en superposition selon la revendication 1 **caractérisé en ce que** le moyen de formation d'une image virtuelle est constituée par un écran électro-optique (2) tel qu'un écran à cristaux liquides rétroéclairé par un bloc optique (1) situé du coté opposé aux miroirs semi-réfléchissants, le bloc optique comprenant une source lumineuse intense et son condensateur (4) et une paire de lentilles de Fresnel (6, 7) alignées avec les axes de vision de chaque oeil (8, 9) de l'observateur, après réflexion par les miroirs semi-réflechissants (3d, 3g), la source de lumière et les lentilles de Fresnel étant disposées de manière à concentrer le flux lumineux au voisinage des points d'observation (8, 9).

3. Dispositif optique pour la visualisation d'une image virtuelle tridimensionnelle en superposition avec un objet réel, selon la revendication 1 ou 2 du type comportant un moyen de formation d'une image virtuelle tridimensionnelle, un miroir semi-transparent disposé entre le point d'observation et la zone observée et formant avec la ligne de vision un angle déterminé de manière à réfléchir l'image virtuelle vers le point d'observation, **caractérisé en ce que** la longueur du chemin optique L₁+L'₁ + L"₁ entre le moyen de formation de l'image virtuelle tridimensionnelle et l'oeil de l'observateur soit identique à la longueur L₂ du chemin optique entre l'objet réel et l'oeil de l'observateur.

4. Dispositif optique pour la visualisation d'une image virtuelle tridimensionnelle en superposition selon la revendication 3 **caractérisé en ce que** le moyen de formation d'une image virtuelle est constitué par un écran électro-optique (2) tel qu'un écran à cristaux liquides formant un couple d'images de synthèse stéréoscopiques (10, 11), l'écran (2) étant éclairé par un bloc optique située du coté opposé au miroir semi-réflechissant (3_{d}, 3_{g}) et comprenant une source lumineuse (4) et une paire de lentilles (6, 7) dont l'un des plans focaux correspond à la source lumineuse, et l'autre plan focal est ramené dans le plan d'observation.

5. Dispositif optique pour la visualisation d'une image virtuelle tridimensionnelle en superposition selon la revendication 1 ou la revendication 4 **caractérisé en ce qu'**il comporte en outre un moyen d'analyse (14) de la position de l'oeil de l'observateur.

6. Dispositif optique pour la visualisation d'une image virtuelle tridimensionnelle en superposition selon l'une quelconque des revendications précédentes **caractérisé en ce qu'**il comporte en outre un moyen d'analyse (16) de la position et de l'orientation de l'objet réel.

7. Dispositif optique pour la visualisation d'une image virtuelle tridimensionnelle en superposition selon la revendication 6 **caractérisé en ce que** le moyen d'analyse de la position et de l'orientation de l'objet réel est constitué par une caméra (16) captant l'image de points de référence (17 à 19) ou de contours de référence.

## Patentansprüche

1. Optische Vorrichtung zur Anzeige eines dreidimensionalen, virtuellen, einem naheliegenden realen Gegenstand übergelagerten Bildes, **dadurch gekennzeichnet, dass** sie ein Mittel zur Gestaltung eines dreidimensionalen virtuellen Bildes und zwei halbtransparente Spiegel umfasst, die zwischen dem Beobachter und dem realen Gegenstand unter den Winkeln α_{d} und α_{g} angeordnet sind, so dass die beiden das dreidimensionale virtuelle Bild gestaltenden synthetischen Bilder sich mit der Sicht des realen Gegenstandes jeweils durch das rechte und das linke Auge überlagern.

2. Optische Vorrichtung zur Anzeige eines dreidimensionalen, virtuellen, überlagerten Bildes nach Anspruch 1, **dadurch gekennzeichnet, dass** das Mittel zur Gestaltung eines virtuellen Bildes aus einem elektrooptischen Bildschirm (2) besteht, wie etwa einem Flüssigkristallbildschirm, der von einem optischen Block (1) von hinten beleuchtet wird, der sich auf der den halbreflektierenden Spiegeln gegenüberliegenden Seite befindet, wobei der optische Block eine starke Lichtquelle und ihren Kondensator (4) und ein Paar Fresnel'sche Zonenplatten (6, 7) umfasst, die auf die Sehachsen des jeweiligen Auges (8, 9) des Beobachters ausgerichtet sind, wobei die Lichtquelle und die Fresnel'schen Zonenplatten nach Spiegelung durch die halbreflektierenden Spiegel (3d, 3g) so angeordnet sind, dass sie den Lichtstrom in der Nähe der Beobachtungspunkte (8, 9) konzentrieren.

3. Optische Vorrichtung zur Anzeige eines dreidimensionalen, virtuellen, mit einem realen Gegenstand überlagerten Bildes nach Anspruch 1 oder 2 von der Art, die ein Mittel zur Gestaltung eines dreidimensionalen virtuellen Bildes, einen halbtransparenten Spiegel, der zwischen dem Beobachtungspunkt und der beobachteten Zone angeordnet ist und mit der optischen Achse einen Winkel bildet, der bestimmt ist, um das virtuelle Bild auf den Beobachtungspunkt hin zu reflektieren, umfasst, **dadurch gekennzeichnet, dass** die optische Weglänge L₁+L'₁+L"₁ zwischen dem Mittel zur Gestaltung des dreidimensionalen virtuellen Bildes und dem Auge des Beobachters mit der optischen Weglänge L₂ zwischen dem realen Gegenstand und dem Auge des Beobachters identisch ist.

4. Optische Vorrichtung zur Anzeige eines dreidimensionalen, virtuellen, überlagerten Bildes nach Anspruch 3, **dadurch gekennzeichnet, dass** das Mittel zur Gestaltung eines virtuellen Bildes aus einem elektrooptischen Bildschirm (2) besteht, wie etwa einem Flüssigkristallbildschirm, der ein Paar stereoskopischer synthetischer Bilder (10, 11) gestaltet, wobei der Bildschirm (2) von einem optischen Block (1) beleuchtet wird, der sich auf der dem halbreflektierenden Spiegel (3_{d}, 3_{g}) gegenüberliegenden Seite befindet und eine Lichtquelle (4) und ein Paar Linsen (6, 7) umfasst, deren eine Fokalebene der Lichtquelle entspricht und deren andere Fokalebene in die Beobachtungsebene zurückgeführt wird.

5. Optische Vorrichtung zur Anzeige eines dreidimensionalen, virtuellen, überlagerten Bildes nach Anspruch 1 oder Anspruch 4, **dadurch gekennzeichnet, dass** sie außerdem ein Mittel (14) zur Positionsanalyse des Auges des Beobachters umfasst.

6. Optische Vorrichtung zur Anzeige eines dreidimensionalen, virtuellen, überlagerten Bildes nach einem der vorstehenden Ansprüche, **dadurch gekennzeichnet, dass** sie außerdem ein Mittel (16) zur Positions- und Ausrichtungsanalyse des realen Gegenstands umfasst.

7. Optische Vorrichtung zur Anzeige eines dreidimensionalen, virtuellen, überlagerten Bildes nach Anspruch 6, **dadurch gekennzeichnet, dass** das Mittel zur Positions- und Ausrichtungsanalyse des realen Gegenstands aus einer Kamera (16) besteht, die das Bild aus Referenzpunkten (17 bis 19) oder Referenzumrissen erfasst.

## Claims

1. An optical device for viewing a three-dimensional virtual image in superimposition with a close real object, **characterized in that** it includes means for forming a three dimensional virtual image and two semi-transparent mirrors positioned between the observer and the real object according to angles, α_{d} and α_{g}, respectively, so that both synthesis images forming the three-dimensional virtual image are superimposed with the view of the real object by the right eye and the left eye, respectively.

2. The optical device for viewing a three-dimensional virtual image in superimposition according to claim 1, **characterized in that** the means for forming a virtual image consists of an electro-optical screen (2) such as a backlit liquid crystal screen, an optical block (1) located on the side opposite to the semi-reflecting mirrors, the optical block comprising an intense light source and its condenser (4) and a pair of Fresnel lenses (6, 7) aligned with the axes of vision of each eye (8, 9) of the observer, after reflection by the semi-reflecting mirrors (3d, 3g), the light source and the Fresnel lenses are positioned in order to concentrate the light flux in the vicinity of the observation points (8, 9).

3. The optical device for viewing a three-dimensional virtual image in superimposition with a real object, according to claim 1 or 2, of the type including means for forming a three-dimensional virtual image, a semi-transparent mirror positioned between the point of observation and the observed area, and forming with the line of view a determined angle in order to reflect the virtual image towards the point of observation, **characterized in that** the length of the optical path L₁+L'₁+L"₁ between the means for forming the three-dimensional virtual image and the eye of the observer is identical to the length L₂ of the optical path between the real object and the observer's eye.

4. The optical device for viewing a three-dimensional virtual image in superimposition according to claim 3, **characterized in that** the means for forming a virtual image consists of an electro-optical screen (2) such as a liquid crystal screen forming a pair of stereoscopic synthesis images (10, 11), the screen (2) being illuminated by an optical block located on the side opposite to the semi-reflecting mirror (3d, 3g) and comprising a light source (4) and a pair of lenses (6, 7) one of the focal planes of which corresponds to the light source and the other focal plane is brought back into the observation plane.

5. The optical device for viewing a three-dimensional virtual image in superimposition according to claim 1 or claim 4, **characterized in that** it further includes means (14) for analyzing the position of the eye of the observer.

6. The optical device for viewing a three-dimensional virtual image in superimposition according to any of the preceding claims, **characterized in that** it further comprises means (16) for forming the position and the orientation of the real object.

7. The optical device for viewing a three-dimensional virtual image in superimposition according to claim 6, **characterized in that** the means for analyzing the position and the orientation of the real object comprises a camera (16) sensing the image of reference points (17-19) or reference contours.
